# EUROPÄISCHE PATENTANMELDUNG

(11) **EP 1 833 098 A1**
(43) Veröffentlichungstag der Anmeldung: **12.09.2007**
(21) Anmeldenummer: 07075176.3
(22) Anmeldetag: 07.03.2007
(51) Int. Cl.: H01L 31/042, F24J 2/52, F24J 2/04

(54) **Kunststoffwanne als Träger für Solarpaneele**

(30) Priorität: 07.03.2006 NL 1031317
(71) Anmelder: Ubbink Econergy Solar GmbH, 50933 Köln (DE)
(72) Erfinder: Ravestein, Frans Gerrit, 3931 EL Woudenberg (NL); Loois, Geerling, 50933 Köln (DE); Theunissen, Verius Leo Antonius, 6921 EE Duiven (NL)
(74) Vertreter: De Hoop, Eric

(57) **Zusammenfassung**

Träger zum Stützen eines Solarpaneels (1), wobei der Träger eine erste, dieses Paneel stützende Seite aufweist mit einem oder mehreren Zurückhaltemitteln (12,13,14) zum Zurückhalten des Solarpaneels (100) in jedenfalls einer von dem Träger abgewandten Aufwärtsrichtung (C), und eine entgegengesetzte, zweite Seite (2) zur Unterstützung des Trägers auf einer Unterlage, insbesondere einem Dach, wobei der Träger aus einem Kunststoff durch Formen gebildet ist und zumindest einige der ersten Zurückhaltemittel einstückig damit geformt und durch eine folgende spanabhebende Bearbeitung gebildet sind.

## Beschreibung

Die Erfindung betrifft einen Träger zum Stützen eines Solarpaneels auf einem Dach, wie zum Beispiel ein Flachdach oder ein schräges Dach. Die Erfindung bezieht sich außerdem auf einen Aufbau oder ein System eines Trägers und einem von diesem gehaltenen Solarpaneel.

Ein Träger der ersten Art ist aus dem europäischen Patent 0.857.926 bekannt. Ein Träger der zweiten Art ist aus dem europäischen Patent 0.949.686 bekannt.

Zum Festlegen eines flach auf dem betreffenden Träger angeordneten Solarpaneels auf dem Träger werden metallförmige Montagesets oftmals umfassend eine L-förmige Klemmplatte oder Klemmschienen und einen Bolzen eingesetzt. Diese Montagesets werden dem Träger mitgeliefert, was einen Preis erhöhenden Einfluss hat. Das zur Verfügung Stellen und Anordnen solcher Montagesets auf dem Dach kann schwierig sein. Insbesondere an schrägen Dächern können Teile dieser Montagesets vom Dach herunterfallen und somit verloren gehen. Die Anbringung der Montagesets bedarf Zeit und somit Geld.

Ein anderer bekannter wannen- oder kastenförmiger Träger ist aus Kunststoff hergestellt und weist angeformte Clips auf, die durch Biegen geöffnet werden können zur Aufnahme des Rand eines Solarpaneels um dieses sodann nach Rückfederung gegen den Rand des Kastens zu klemmen. Mittels der Biegefähigkeit dieser Clips kann die somit zu liefernde Haltekraft unter schweren Betriebsumständen nicht ausreichend sein, sodass das Risiko gegeben ist, dass das Solarpaneel angehoben wird.

Es ist Aufgabe der Erfindung einen Träger für Solarpaneele zur Verfügung zu stellen, mit dem ein Solarpaneel auf einfache Weise positioniert werden kann.

Es ist Aufgabe der Erfindung einen Träger für Solarpaneele zur Verfügung zu stellen, mit dem ein Solarpaneel auf relativ preiswerte Weise angeordnet werden kann.

Es ist Aufgabe der Erfindung einen Träger für Solarpaneele zur Verfügung zu stellen, mit dem ein Solarpaneel zuverlässig und sicher befestigt werden kann.

Gemäß einem Aspekt der Erfindung wird ein Träger zum Stützen eines Solarpaneels zur Verfügung gestellt, wobei der Träger eine erste, dieses Paneel stützende Seite aufweist mit einem oder mehreren Zurückhaltemitteln zum Zurückhalten des Solarpaneels in jedenfalls einer von dem Träger abgewandten Richtung, und eine entgegengesetzte, zweite Seite zur Unterstützung des Trägers auf einer Unterlage, insbesondere einem Dach, wobei der Träger aus einem Kunststoff durch formen gebildet ist und zumindest einige der ersten Zuruckhaltemittel einstückig damit geformt und durch eine folgende spanabhebende Bearbeitung gebildet sind.

Der Träger kann auf einfache und preiswerte Art und Weise aus Kunststoff hergestellt werden, durch ein Formverfahren, insbesondere mit Hilfe von Vakuumformen, wobei eine oder mehrere unmittelbar mitgeformten, ersten Zurückhaltemittel die Zurückhalterung des Paneels in einer in Richtung der Sonne ausgerichteten Richtung sicherstellen. Aufgrund der Realisierung der ersten Zurückhaltemittel mit Hilfe einer spanabhebenden Bearbeitung, durchgeführt am Ort der Herstellung, können diese dennoch auf einfache Weise mitgeformt werden, ohne Notwendigkeit gegenlösender (in der niederländischen Sprache als "tegenlossende" bezeichnet) Formabschnitte. Die ersten Zurückhaltemittel brauchen nicht biegbar ausgebildet zu sein und können somit vergleichsweise steif und somit stark ausgebildet werden. Durch Einsatz solcher Zurückhaltemittel aus Kunststoff kann im Bezug auf die Kosten für solche Teile Geld eingespart werden. Außerdem führt der Einsatz von Kunststoff zu einer Verringerung des Risikos auf Beschädigung der Ränder des Solarpaneels.

Vergleichbare Vorteile werden erzielt, wenn die das Paneel stützende Seite ein oder mehrere zweite Zurückhaltemittel aufweist zum Zurückhalten des Solarpaneels in wenigstens eine Richtung parallel zum Paneel, wobei die zweiten Zurückhaltemittel aus Kunststoff gebildet sind, vorzugsweise einstückig mit dem Träger geformt. Das Solarpaneel wird dann auch in eine oder mehrere, seitliche Richtungen eingeschlossen gehalten.

Eine besonders einfache und somit preiswerte Ausführungsform wird erhalten, wenn alle ersten und / oder alle zweiten Zurückhaltemittel einstückig mit dem Träger gebildet sind. Im äußersten Falle sind dann überhaupt keine gesonderten Montageteile erforderlich und kann das Solarpaneel selbst unmittelbar an dem Träger befestigt werden.

Die ersten und / oder zweiten Zurückhaltemittel können im Abstand zueinander angeordnet sein, damit sich die Haltekräfte über den Rand des Solarpaneels verteilen.

In einer besonders einfachen Ausführungsform bilden zumindest einige der ersten Zurückhaltemittel zugleich zweite Zurückhaltemittel.

Vorzugsweise sind zumindest zwei der ersten Zurückhaltemittel an entgegen gesetzten Rändern des Solarpaneels tätig. Vorzugsweise sind zumindest drei der ersten Zurückhaltemittel an jeweils unterschiedlichen Rändern des Solarpaneels tätig. Besonders vorzugsweise sind zumindest vier der ersten Zurückhaltemittel an den jeweils unterschiedlichen Rändern des Solarpaneels tätig. Dies ist abhängig von der erwünschten Vollständigkeit der Einschließung in der Fläche des Solarpaneels.

In ähnlicher Weise können zumindest zwei der zweiten Zurückhaltemittel tätig sein an entgegen gesetzten Rändern des Solarpaneels, vorzugsweise zumindest drei der zweiten Zurückhaltemittel tätig an jeweils unterschiedlichen Rändern des Solarpaneels, insbesondere vorzugsweise zumindest vier der ersten Zurückhaltemittel tätig an jeweils unterschiedlichen Rändern des Solarpaneels.

In einem weiteren Aspekt der Erfindung wird ein Träger zum Stützen des Solarpaneels zur Verfügung gestellt, wobei der Träger eine erste, das Paneel stützende Seite besitzt mit einem oder mehreren Einschließmitteln zum in aufwärts und abwärts gerichtete Richtungen Zurückhalten des Solarpaneels und eine entgegengesetzte zweite Seite zur Unterstützung des Trägers auf einer Unterlage, insbesondere einem Dach, wobei zumindest einige der Einschließmittel einstückig mit dem Träger aus Kunststoff geformt und durch eine folgende spanabhebende Bearbeitung gebildet sind.

Die Einschließmittel können zugleich zurückhaltend / entgegenhaltend tätig sein in zumindest einer seitlichen Richtung des Solarpaneels. Die Einschließmittel können in wenigstens zwei entgegengesetzten seitlichen Richtungen des Solarpaneels tätig sein.

Vorzugsweise sind alle Einschließmittel einstückig mit dem Träger gebildet.

In einer Ausführungsform für Flachdächer ist die erste Seite unter einem Winkel relativ zur zweiten Seite angeordnet.

In einer Ausführungsform für schräge Dächer sind die erste und die zweite Seite zueinander parallel gebildet.

In einer Ausführungsform ist die erste Seite jedenfalls örtlich elastisch verformbar aus der Ebene des Solarpaneels.

Die Zurückhaltemittel oder auch die Einschließmittel können Anschläge für den Rand des Solarpaneels bilden.

In einer weiteren Ausführungsform ist der Träger kastenförmig oder wannenförmig gebildet.

Die Erfindung stellt außerdem einen Aufbau oder ein System eines erfindungsgemäßen Trägers und eines darauf befestigten Solarpaneels zur Verfugung. Außerdem umfasst die Erfindung eine Anordnung eines solchen Aufbaus oder Systems, angeordnet auf einem Flachdach oder auf einem schräg verlaufenden Dach.

Dabei können die ersten Zurückhaltemittel oder auch die Einschließmittel mit Spiel über das Solarpaneel her ragen, sodass der Rand des Solarpaneels in Folge einer Klemmkraft nicht beschädigt wird.

In einem weiteren erfindungsgemäßen Aspekt ist ein Verfahren zur Herstellung eines erfindungsgemäßen Trägers vorgesehen, wobei eine Platte aus Kunststoff bestehenden Ausgangsmaterial in eine Form aufgestellt wird und durch Formen zu diesem Träger gebildet wird, wobei an einem, insbesondere flanschförmigen Rand der ersten Seite des Trägers am Ort der ersten Zurückhaltemittel oder auch der Einschließmittel Erhöhungen in diesem Rand gebildet werden, wobei nach der Entnahme des geformten Trägers aus der Form Material aus diesen Erhöhungen entfernt wird zur Bildung von zur ersten Seite parallel verlaufenden Schlitzen zur Aufnahme des Randes eines Solarpaneels.

Die Schlitze können vorzugsweise erhalten werden mit Hilfe einer spanabhebenden Bearbeitung in einer Richtung quer zu einer zum Lösen der benutzten Form vorgesehenen Richtung, insbesondere mit Hilfe einer Sägebearbeitung.

Vorzugsweise findet das Formen mit Hilfe der Vakuumformung statt.

Die in der Beschreibung beschriebenen und / oder gezeigten Aspekte und Maßnahmen können wo möglich auch von einander unabhängig Einsatz finden. Die jeweiligen Aspekte können Gegenstand darauf bezogener Teilanmeldungen sein.

Die Erfindung wird an Hand des in den beigefügten Zeichnungen dargestellten Ausführungsbeispiels näher erläutert. Es ist gezeigt:
- Figur 1: eine isometrische Ansicht eines Ausführungsbeispiels eines erfindungsgemäßen Trägers;

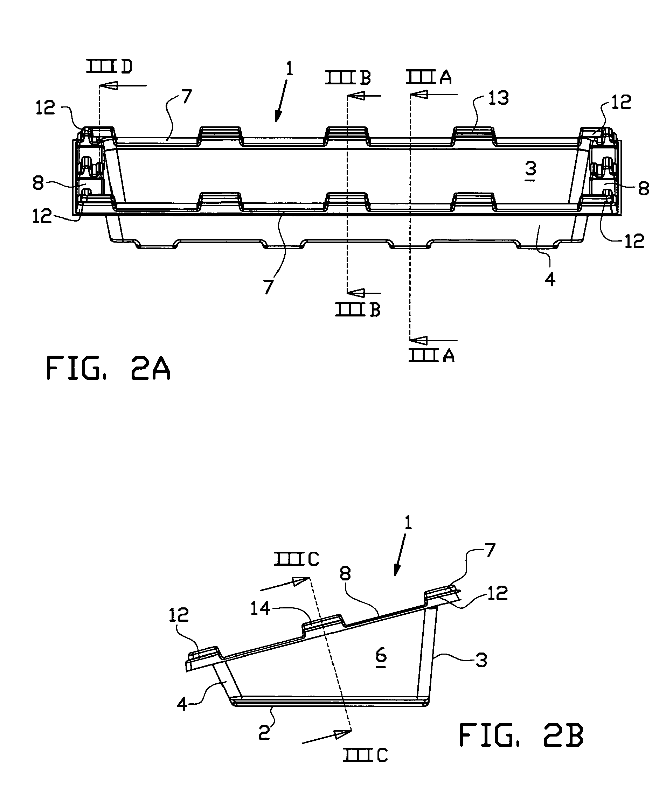

- Figur 2A und 2B: jeweils eine Ansicht und eine Seitenansicht des Trägers gemäß Figur 1;
- Figur 3A-C: Querschnitt gemäß III A-C in den Figuren 2A und 2B;
- Figur 3D und 3E: detaillierter Querschnitt gemäß III D in Figur 2A und III E in Figur 3B; und
- Figur 4: der Träger gemäß Figur 1, aufweisend ein darauf angeordnetes Solarpaneel in Betriebsposition.

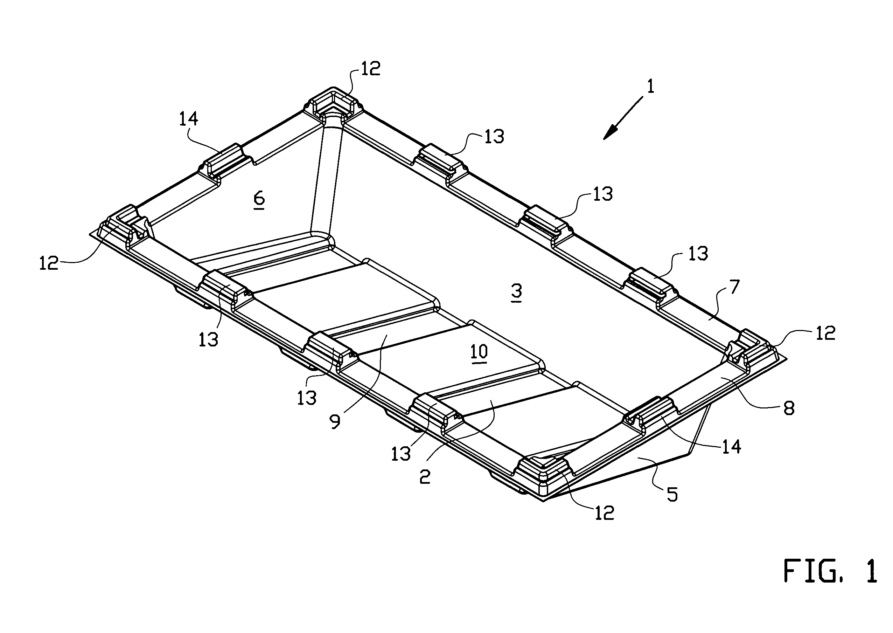

Der Träger 1 gemäß Figur 1 ist kastenförmig oder wannenförmig ausgebildet und einstückig in einer Vormverfahren, beispielsweise mittels Spritzgießens oder Vakuumformens aus einem Kunststoff hergestellt, beispielsweise Polyethylen. Ein im Allgemeinen vergleichbarer Kasten ist ausführlich in dem europäischen Patent 0.857.926 beschrieben, dessen Inhalt hier als mit enthalten zu bewerten ist.

Der Kasten 1 weist eine Bodenwand 2, eine hohe Rückwand 3, eine einigermaßen niedrige Vorderwand 4 und Seitenwände 5 und 6 auf. Die Seite des Trägers entgegengesetzt zur Bodenwand 2 ist offen, wobei die Öffnung umgeben wird von einem umlaufenden Flansch, aufgebaut aus Längsflanschen 7 und Querflanschen 8. Die Bodenwand 2 weist Absenkungen 9 und Erhöhungen / Erhebungen 10 auf. Die Seite der Öffnung steht unter einem spitzen Winkel relativ zur Bodenwand 2, sodass der Träger 1 zur Anordnung auf einem Flachdach geeignet ist.

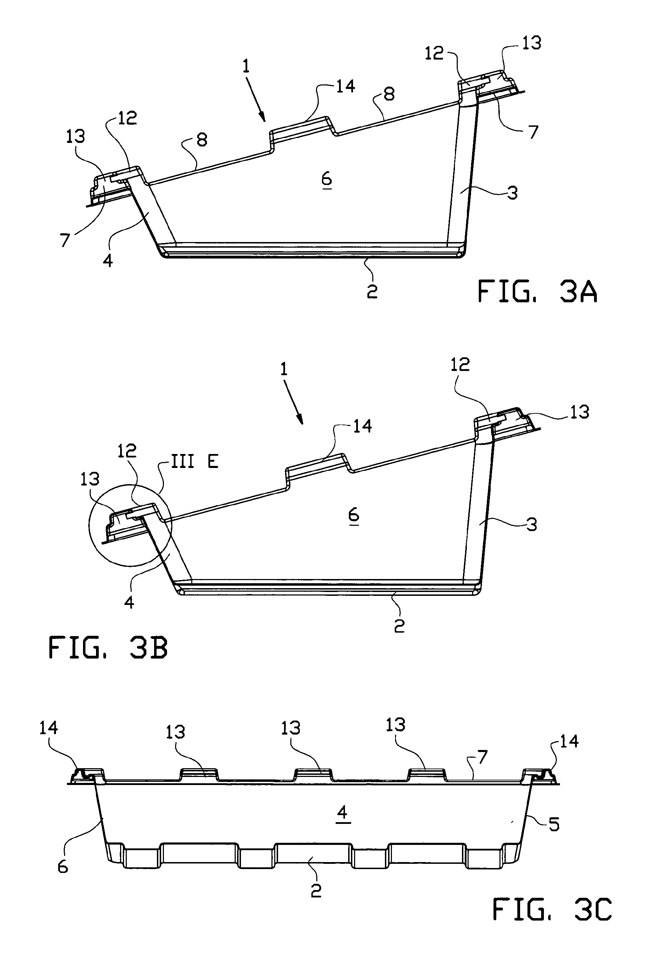

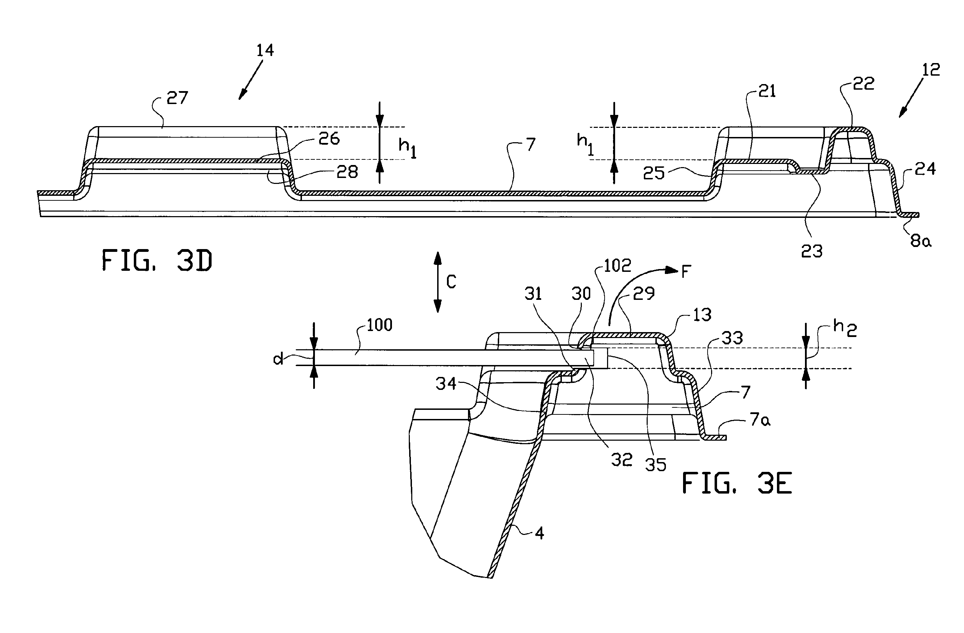

Der Flansch 7/8 weist Erhöhungen 12, 13 und 14 auf, damit einstückig gebildet. Die Erhöhungen 12 sind in einer Aufsicht L-förmig und in Figur 3D im Querschnitt näher dargestellt. Sie bilden eine Stützfläche 21 und eine Rippe 22, die dazwischen einen Kanal 23 bestimmen. Die Stützfläche 21 geht in eine Einwärtsrichtung über den Wandabschnitt 25 über in die Wand des Flansches 7. Die Rippe 22 geht über den Wandabschnitt 24 über in den Rand 8a des Flansches 8 (auf der Seite des Flansches 7 in derselben Weise in den Rand 7a). Die Rippe 22 ragt über die Entfernung h1 hinaus über der Stützfläche 21.

Die Erhöhungen 13 (siehe Figur 3E) sind in den Längsflanschen 7 vorgesehen und weisen jeweils eine obere Fläche 29 auf, die an der von der Öffnung abgewandten Seite über den Wandabschnitt 33 ausmündet in den hiervor genannten Flanschrand 7a. An der zur Kastenöffnung hin gewandten Seite ist eine seitliche Öffnung, insbesondere ein Schlitz 32 gebildet, begrenzt von einem oberen Rand 30 und einem unteren Rand 31, und durch aufrecht stehende Ränder 35. Der obere Rand 31 bildet den oberen Rand des Wandabschnitts 34, der übergeht in die aufrecht stehende Wand 4 (oder auch zur gegenüberliegenden Erhöhung 13 die senkrecht stehende Wand 3), abhängig davon, wo die Erhöhung 13 positioniert ist. Die durch die Ränder 30 und 31 bestimmte Öffnung 32 hat eine Höhe von h2.

Die Erhöhungen 13 sind in diesem Beispiel in einer dreifachen Ausführung in unter sich gegebenen Abständen an die Längsflanschen 7 gebildet.

Die in dem Querflansch über den Seitenwänden 5 und 6 angeordneten Erhöhungen 14 sind im Wesentlichen entsprechend den Erhöhungen 12 ausgebildet, jedoch nicht L-förmig. Sie weisen somit (Figur 3D) eine Stützfläche 26, eine Rippe 27 und eine dazwischen gelegene Absenkung oder Kanal 28, vergleichbar mit dem Kanal 23 auf. Der Abstand, mit welchem die obere Fläche der Rippe 27 über die Stützfläche 26 hinausragt, ist, wie bei den Erhöhungen 12, h1.

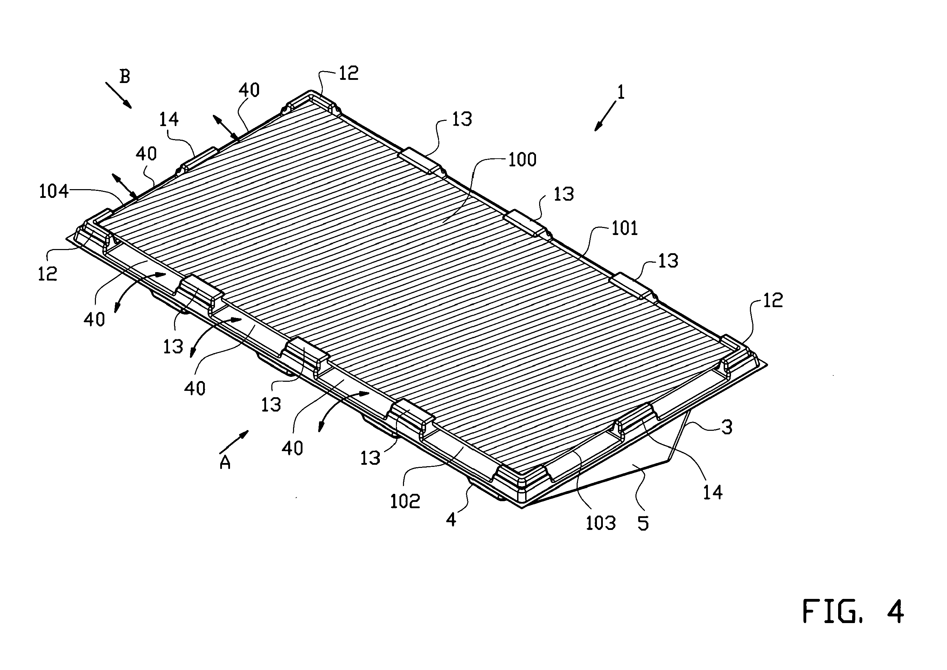

Wenn (siehe Figur 4) ein Aufbau oder System von Träger 1 und Solarpaneel 100 auf einem, in diesem Ausführungsbeispiel, Flachdach aufgestellt wird, wird zunächst der Kasten 1 mit der Bodenwand 2 auf der Dachfläche aufgestellt. Anschließend wird (nicht dargestellt) Ballastmaterial, wie zum Beispiel Ziegel, in dem Kasten 1 auf den Erhöhungen 10 positioniert.

Sodann wird das Solarpaneel 100 zugeführt. Das Solarpaneel 100 kann ein PV-Paneel sein, beispielsweise in einer eingerahmten Ausführung, mit einem oder ohne ein Aluminium-Randprofil, das eine Glasplatte umfasst, die eine Gruppe kristalliner PV-Zellen in Kunststoff EVA umfasst. An der diesbezüglichen Unterseite kann eine Folie vorgesehen sein. Bislang wurde ein solcher Rahmen mit Hilfe von Bolzen oder auch Klemmen festgeschraubt an dem Träger, oder darauf mit Hilfe angeformter Clips festgeklemmt. In einer weiteren Ausführungsform weist das PV-Paneel ein Laminat auf, mit zwei Glasplatten von beispielsweise vier Millimeter Dicke mit dazwischen eine beispielsweise 0,4 Millimeter dicke Schicht aus PV-Zellen in Kunststoff.

Solche Glasplatten aufweisende PV-Platten sind sehr begrenzt biegbar, jedoch bruchanfällig.

Das PV-Paneel 100 kann in einer Lage etwa parallel zu der von den Flanschrändern 7 und 8 umgebenen Öffnung oberhalb des Kastens 1 gebracht werden, in einer Richtung A (Figur 4) quer zu der vorderen Wand 4. Der Längsrand 101 wird dabei auf den Stützflächen 21 der Erhöhungen 12 angeordnet und in die Öffnungen 32 der Erhöhungen 13 eingeführt. Dies ist möglich, weil die Dicke d der Platte 100 ein wenig kleiner ist als h2. Anschließend lässt man den Längsrand 102 senken, bis dieser auf den oberen Flächen der Rippen 29 der Erhöhungen 13 auf dem Flansch 7 an der Längswand 4 ruht. Die Konstruktion des Kastens 1, insbesondere der Längswand 4 mit Flansch 7 ist jetzt derartig, dass durch eine Kraftausübung F (Figur 3E) auf die Rippe 29, diese durch Verformung in den Flansch 7 / Längswand 4 weggebogen werden kann, damit der Längsrand 102 an dem Oberrand 30 vorbei und bis unterhalb des Oberrandes 30 bewegt werden kann. Sodann ruht der Längsrand 102 mit den Enden auf den Stützflächen 21 der angrenzenden Eckerhöhungen 12 und kann man die Erhöhungen 13 wieder loslassen, sodass sich diese auf elastische Weise zurück bewegen, und der Oberrand 30 über den Längsrand 102 greift. Das Ergebnis zeigt dann, dass das Solarpaneel 100 an beiden Längsrändern 101 und 102 entgegen einer Aufwärtsbewegung eingeschlossen gehalten wird, durch die überstehenden Abschnitte der Erhöhungen 13, insbesondere die als Anschläge dienenden Ränder 30. Alternativ kann man das Paneel 100 zuerst mit dem Rand 102 in die Erhöhungen 13 an der Wand 4 positionieren, und danach die Wand 3 mit Erhöhungen kurz wegbiegen zum Einschließen des Randes 101.

Auch in Richtungen parallel zum Paneel wird das Paneel 100 gegen Verschiebungen gehalten mittels Anschläge, an den Erhöhungen 12 und 14, und durch Ränder 35 der Erhöhungen 13. Die Erhöhungen 12 bilden dabei mit der Rippe 22 einen Einschluss, am Ort der Ecken der Ränder 101 und 102 mit Rändern 103 und 104, in beiden, senkrecht zueinander stehenden, horizontalen Richtungen, parallel zur Hauptfläche des Solarpaneels 100. Die Höhe h1 der Rippe 22 der Erhöhungen 12 ist größer als die Dicke d des Paneels 100. Das Paneel 100 ruht auf den Stützflächen 21. Die Erhöhungen 14 sorgen dabei mit der Rippe 27 für einen Einschluss in einem einzigen Paar entgegengesetzter horizontaler Richtungen, parallel zur Hauptfläche des Solarpaneels 100. Die Höhe h1 der Rippe 27 ist größer als die Dicke d des Paneels 100. Die Querränder 103 und 104 werden nicht nur durch die Eckerhöhungen 12 zurückgehalten, sondern auch durch die Erhöhungen 14, wobei das Solarpaneel 100 mit den Rändern 103 und 104 auf den Stützflächen 26 ruht.

Die Kanäle 23 und 28 sorgen in diesem Falle dafür, dass am Ort der Kanten der Ränder 101, 102, 103, 104 kein Wasser stehen bleibt, das unverhofft zwischen den Schichten des Solarpaneels gelangen könnte. Dadurch, dass die Stützflächen 21, 26 oberhalb flacher Zwischenabschnitte der Flanschen 7, 8 angeordnet sind, werden zwischen dem Paneel 100, den Flanschen 7, 8 und den Erhöhungen 12, 13, 14 Durchgänge 40 zur Belüftung gebildet.

Die Länge des Übergreifens am Ort der Obenränder 30 der Erhöhungen 13 ist derart, dass die eigentlichen Photovoltaik(PV)-Zellen nicht abgedeckt werden. Dabei wird der Umstand genutzt, dass die betreffenden Ränder normalerweise PV-Zellen-frei sind, weil dieses Gebiet zur Abschirmung dieser Zellen auf längerer Sicht genutzt wird. Degenerationen und Wasserlecks können dadurch nicht zu den Zellen gelangen. Zum Einschluss mit Hilfe der Rippe 29 und des Oberrandes 30 wird diese Situation somit genutzt.

Der Abschnitt der Rippen kurz oberhalb des Oberrandes 30 ist abgeschrägt / abgerundet, möglichst zur Vermeidung einer Schattenwirkung.

Wie aus den Figuren 3D und 3E hergeleitet werden kann, sind die Erhöhungen 12, 13, 14 derart gebildet, dass es keine gegenlösenden Abschnitte gibt (siehe Oben). In dieser Form kann der Kasten 1 mit Hilfe eines Vakuumformverfahrens geformt werden und die hier oben beschriebenen Funktionen bereitstellen. Der Kasten 1 kann aus einer Platte aus Kunststoffmaterial vakuumgeformt werden, wonach die Öffnungen oder Schlitze 32 in den Erhöhungen 13 ausgesägt werden, quer zur Löserichtung C.

Als Alternative kann man sich entscheiden, eine oder mehrere der Erhöhungen zwar aus Kunststoffmaterial her zu stellen jedoch entfernbar aus zu bilden, zur Vereinfachung der Positionierung des Solarpaneels, beispielsweise wenn ein noch starrerer Kasten zum Einsatz kommt. In diesem Fall können beispielsweise an einem der Querflansche 8 die Abschnitte der dortigen Eckerhöhungen 12 weggelassen werden, und die dort vorhandene Mittenerhöhung 14 ebenfalls. Das Solarpaneel kann dann parallel zur Öffnung in die Richtung B, senkrecht zu der Seitenwand 6 eingeführt werden, wobei die Längsränder 101 und 102 in Längsrichtung in die Öffnungen 32 aufgenommen werden. Wenn der eine Querrand 103 des Solarpaneels gegen die gegenüberliegenden Erhöhungen 12 und 14 trifft, kann eine Erhöhung 14, gegebenenfalls als eine Erhöhung 13 ausgebildet, auf den betreffenden Querflansch 8 geklickt werden um somit auch das Solarpaneel an diesem Rand 104 ein zu schließen.

In einer weiteren alternativen Ausführungsform sind nur die Erhöhungen 13 und 14 vorhanden, eventuell nur an einem Querrand einer oder mehrerer Erhöhungen 14.

In einer weiteren alternativen Ausführungsform weisen beide Längsränder Erhöhungen 13 auf und nur an einem Querrand Erhöhungen 12 und 14.

## Patentansprüche

1. Träger zum Stützen eines Solarpaneels, wobei der Träger eine erste, dieses Paneel stützende Seite aufweist mit einem oder mehreren Zurückhaltemitteln zum Zurückhalten des Solarpaneels in jedenfalls einer von dem Träger abgewandten Aufwärtsrichtung, und eine entgegengesetzte, zweite Seite zur Unterstützung des Trägers auf einer Unterlage, insbesondere einem Dach, wobei der Träger aus einem Kunststoff durch formen gebildet ist und zumindest einige der ersten Zurückhaltemittel einstückig damit geformt und durch eine folgende spanabhebende Bearbeitung gebildet sind.

2. Träger gemäß Patentanspruch 1, wobei die das Paneel stützende Seite ein oder mehrere Zurückhaltemittel aufweist zum in zumindest einer Richtung parallel zum Paneel Zurückhalten des Solarpaneels, wobei die zweiten Zurückhaltemittel aus Kunststoff gebildet sind, vorzugsweise einstückig mit dem Träger geformt sind.

3. Träger gemäß Patentanspruch 1 oder 2, wobei sämtliche erste und / oder sämtliche zweite Zurückhaltemittel einstückig mit dem Träger gebildet sind.

4. Träger gemäß einem der vorangegangenen Patentansprüche, wobei die ersten Zurückhaltemittel zueinander in einem Abstand angeordnet sind.

5. Träger gemäß einem der vorangegangenen Patentansprüche, wobei die zweiten Zurückhaltemittel zueinander in einem Abstand angeordnet sind.

6. Träger gemäß einem der vorangegangenen Patentansprüche, wobei zumindest einige der ersten Zurückhaltemittel an Erhöhungen oder Vorsprüngen gebildet sind, die zugleich zweite Zuruckhaltemittel bilden.

7. Träger gemäß einem der vorangegangenen Patentansprüche, wobei zumindest zwei der ersten Zurückhaltemittel tätig sind an entgegengesetzten Rändern des Solarpaneels, wobei vorzugsweise zumindest drei der ersten Zurückhaltemittel tätig sind an jeweils unterschiedlichen Rändern des Solarpaneels, wobei vorzugsweise zumindest vier der ersten Zurückhaltemittel tätig sind an jeweils unterschiedlichen Rändern des Solarpaneels.

8. Träger zum Stützen eines Solarpaneels, wobei der Träger eine erste, das Paneel stützende Seite besitzt mit einem oder mehreren Einschließmitteln zum in aufwärts und abwärts gerichtete Richtungen Zurückhalten des Solarpaneels und eine entgegengesetzte zweite Seite zur Unterstützung des Trägers auf einer Unterlage, insbesondere einem Dach, wobei zumindest einige der Einschließmittel einstückig mit dem Träger aus Kunststoff geformt und durch eine folgende spanabhebende Bearbeitung gebildet sind.

9. Träger gemäß Patentanspruch 8, wobei die Einschließmittel zugleich zurückhaltend tätig sind in zumindest einer seitlichen Richtung des Solarpaneels, vorzugsweise tätig sind in wenigstens zwei entgegengesetzten seitlichen Richtungen des Solarpaneels.

10. Träger gemäß Patentanspruch 8 oder 9, wobei alle Einschließmittel einstückig mit dem Träger gebildet sind.

11. Träger gemäß einem der vorangegangenen Patentansprüche, wobei die erste Seite unter einem Winkel relativ zur zweiten Seite angeordnet ist.

12. Träger gemäß einem der Patentansprüche 1 bis 10, wobei die erste und die zweite Seite zueinander parallel gebildet sind.

13. Träger gemäß einem der vorangegangenen Patentansprüche, wobei die erste Seite jedenfalls örtlich elastisch aus der Ebene des Solarpaneels verformbar ist.

14. Träger gemäß einem der vorangegangenen Patentansprüche, wobei die Zuruckhaltemittel oder auch die Einschließmittel Anschläge für den Rand des Solarpaneels bilden.

15. Träger gemäß einem der vorangegangenen Patentansprüche, wobei der Träger wannen- oder kastenförmig gebildet ist oder die Form eines Behälters hat.

16. System oder Aufbau eines Trägers gemäß einem der vorangegangenen Patentansprüche und einem Solarpaneel.

17. System oder Aufbau gemäß Patentanspruch 16, wobei die ersten Zurückhaltemittel oder auch die Einschließmittel mit Spiel über das Solarpaneel her ragen.

18. Aufstellung oder Anordnung eines Aufbaus gemäß Patentanspruch 16 oder 17, angeordnet auf einem Flachdach.

19. Aufstellung eines Aufbaus gemäß Patentanspruch 16 oder 17, angeordnet auf einem schräg verlaufenden Dach.

20. Verfahren zur Herstellung eines Trägers gemäß einem der Patentansprüche, wobei eine Platte aus Kunststoff als Ausgangsmaterial in einer Form, vorzugsweise in einer Vakuumform, aufgestellt wird und durch Formen zu diesem Träger gebildet wird, wobei an einem, insbesondere flanschförmigen Rand der ersten Seite des Trägers am Ort der ersten Zurückhaltemittel oder auch der Einschließmittel Erhöhungen in diesem Rand gebildet werden, wobei nach der Entnahme des geformten Trägers aus der Form Material aus diesen Erhöhungen entfernt wird zur Bildung von zur ersten Seite parallel verlaufenden Schlitzen zur Aufnahme des Randes eines Solarpaneels.

21. Verfahren gemäß Patentanspruch 20, wobei die Schlitze erhalten werden mit Hilfe einer spanabhebenden Bearbeitung in Richtung quer zu einer zum Lösen der benutzten Form vorgesehenen Richtung, insbesondere mit Hilfe einer Sägebearbeitung.
